Europäisches Patentamt

**European Patent Office**

Office européen des brevets

(19)

(11) Publication number : **0 445 940 B1**

(12) **EUROPEAN PATENT SPECIFICATION**

(45) Date of publication of patent specification :
**26.04.95 Bulletin 95/17**

(51) Int. Cl.⁶ : **G05B 11/42**

(21) Application number : **91301454.4**

(22) Date of filing : **22.02.91**

(54) **Process control system.**

(30) Priority : **09.03.90 JP 58438/90**

(43) Date of publication of application :
**11.09.91 Bulletin 91/37**

(45) Publication of the grant of the patent :
**26.04.95 Bulletin 95/17**

(84) Designated Contracting States :
**DE FR GB**

(56) References cited :
**EP-A- 0 333 477**
**PATENT ABSTRACTS OF JAPAN vol. 12, no.
259 (P-733)(3106) 21 July 1988, & JP-A-63 46502
(YOKOGAWA ELECTRIC CORP) 27 February
1988,**
**PATENT ABSTRACTS OF JAPAN vol. 12, no.
259 (P-733)(3106) 21 July 1988, & JP-A-63 46503
(YOKOGAWA ELECTRIC CORP) 27 February
1988,**

(73) Proprietor : **KABUSHIKI KAISHA TOSHIBA**
**72, Horikawa-cho**
**Saiwai-ku**
**Kawasaki-shi Kanagawa-ken 210 (JP)**

(72) Inventor : **Hiroi, Kazuo, c/o Intellectual**
**Property Division**
**Toshiba Corporation,**
**1-1, Shibaura 1-chome**
**Minato-ku, Tokyo 105 (JP)**

(74) Representative : **BATCHELLOR, KIRK & CO.**
**2 Pear Tree Court**
**Farringdon Road**
**London EC1R 0DS (GB)**

## Description

This invention relates to a process control system, and more particularly to a process control system having two-degrees of freedom for proportional control operation.

Proportional and Integration (PI) or Proportional Integration, and Derivative (PID) control devices have been widely utilized in all fields of production, since the inception of process control. Indeed, in the field of instrumentation, PID control devices have become indispensable.

In the past, various kinds of control systems have been proposed. A shift has now taken place from analog systems to digital control and calculating systems. However, the leading role of plant operation control in the application of PID control devices remains unchanged.

The basic equation of such PID control calculation is:

$$MV(s) = Kp \left(1 + \frac{1}{T_I \cdot s} + \frac{T_D \cdot s}{1 + \eta \cdot T_D \cdot s}\right) E(s) \quad (1)$$

where MV(s) is the operating signal, E(s) is the deviation, Kp is the proportional gain, $T_I$ is the integral time, $T_D$ is the deviation time, s is the Laplace operator, and $(1/\eta)$ is the derivative gain.

Such PID control calculation is called a PID control calculation system with one degree of freedom.

This constitutes a so-called system with one degree of freedom, in which only one set of PID control constants can be set.

It is of course impossible to optimize simultaneously both the external disturbance suppression characteristic and the target value tracking chracteristic.

In general, a control system employing PI or PID control operations must satisfy the functions of both an external disturbance suppression characteristic and a target value tracking characteristic.

The former the external disturbance suppression characteristic, indicates how best to suppress the effect of external disturbance.

The latter, the target value tracking characteristic, indicates how best to track the target value of the process value when this target value is changed.

In an ordinary PI or PID cotrol system, the values of the PI or PID control constants for optimal suppression of the effect of changes in external disturbance and the values of the PI and PID control constants for optimal tracking of changes in target value are very different, so that these two characteristics can not be optimized simultaneously. In fact, they are in an antinomic relationship.

Specifically, if the PID control constants are set so as to optimally suppress the effect of changes in external disturbance, the target value tracking characteristic becomes oscillatory. On the other hand, if the PID control constants are set so as to optimally track changes in target value, the external disturbance suppression characteristic becomes very soft.

Development of a technique for simultaneously optimizing the external disturbance suppression characteristic and target value tracking characteristic of such PID control devices is therefore desirable.

To deal with this, in 1963, Issac M Horowitz announced the basic concept of a two degrees of freedom PI or PID (herein below abbreviated as 2 DOF PID) algorithm in which two sets of PID control constants could be independently set. 2 DOF PID based on this concept have been implemented in Japan also in recent years, and are making a large contribution to improvement of plant operation control.

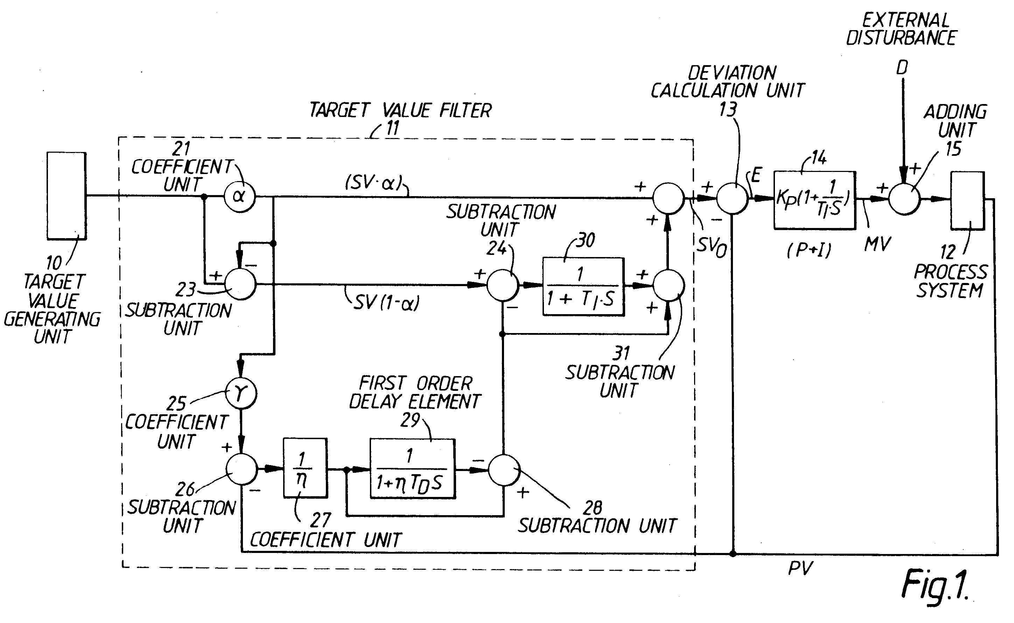

FIG.1 is a block diagram of a conventional two degrees of freedom type PID control system wherein P operation and D operation are given two degrees of freedom. In this system, there is provided a target value filter 11 that carries out calculation processing that obtains the proportional gain and derivative time in two degrees of freedom type. The system receives a target value SV from a target value generating unit 10 and feeds to a deviation calculation unit 13 a control amount PV from a system 12 to be controlled and filter output SVo obtained from target value filter 11. Deviation calculation unit 13 performs the calculation (SVo - PV) to find the deviation E, which is then fed to a PI control calculation unit 14. This PI control calculation unit 14 receives deviation E and performs PI control calculation to obtain an operating signal MV, which is then fed to an adding unit 15. This adding unit 15 combines operating signal MV and an external disturbance signal D by adding them, and applies the combined added signal which is obtained to the controlled system 12, thereby performing control such that target value SVo = control amount value PV.

In target value filter 11, coefficient unit 21 multiplies target value SV by proportional gain revision coefficient $\alpha$ for realizing two degrees of freedom for proportional control operation, to obtain a output (SV.$\alpha$), which is then fed to an adding unit 22. A subtraction unit 23 then subtracts the output (SV.$\alpha$) of coefficient unit 21 from target value SV. The subtraction output SV(1 - $\alpha$) which is obtained is then supplied to a subtraction unit 24.

The output (SV.$\alpha$) of the coefficient unit 21 is also fed to a coefficient unit 25 which multiplies this output

(SV.$\alpha$ ) by derivative time revision coefficient $\gamma$ for realizing two degrees of freedom of derivative control operation to obtain a multiplied output (SV.$\alpha$ .$\gamma$ ), which is then fed to a subtraction unit 26.

This subtraction unit 26 subtracts control amount PV from multiplied output (SV.$\alpha$.$\gamma$ ), to obtain a subtracted output (SV.$\alpha$.$\gamma$ ) - PV, which is fed to a coefficient unit 27, where this subtraction output (SV.$\alpha$.$\gamma$ ) - PV is multiplied by derivative gain 1/$\eta$ . The output of this coefficient unit 27 is branched into two. One of these outputs is input directly to a subtraction unit 28. The other outputs is input to subtraction means 28 through a first order delay element 29.

In subtraction unit 28, the output of first order delay element 29 is subtracted from the output of coefficient means 27, and the result is then supplied to subtraction unit 24. This subtraction unit 24 then subtracts the output of subtraction unit 28 from the output of subtraction unit 23. The output obtained is given an appropriate delay by passing it through a first order delay element 30 whose time constant is the integral time $T_I$. An adding unit 31 then adds the output of this first order delay element 30 and the output of subtraction unit 28. Adding unit 22 then adds this to the output of a coefficient unit 21, to obtain the output SVo of target value filter 11.

The following relationship therefore subsists between the output SVo of target value filter 11 and target value SV and control amount value PV.

$$SVo = \frac{1 + \alpha \cdot T_I \cdot s}{1 + T_I \cdot s} SV + \frac{T_D \cdot s}{1 + \eta \cdot T_D \cdot s} \cdot \frac{1}{1 + T\, s} (\alpha \cdot \gamma \cdot SV - PV) \quad (2)$$

As a result, taking the target value SV component in operating signal MV to be MVs from FIG. 1 and equation (2) above, we have the following equation.

$$\frac{MVs}{SV} = Cs(s) = Kp(\alpha + \frac{1}{T_I \cdot s} + \frac{\alpha \cdot \gamma \cdot T_D \cdot s}{1 + \eta \cdot T_D \cdot s}) \quad (3)$$

And taking the control amount value PV component in the operating signal MV as MVp, we likewise, obtain from FIG. 1 and equation (2) above, we have the following equation.

$$\frac{-MVp}{SV} = Cp(s) = Kp(1 + \frac{1}{T_I \cdot s} + \frac{T_D \cdot s}{1 + \eta \cdot T_D \cdot s}) \quad (4)$$

Consequently, as is clear from these equations (3) and (4), a simple PID control is achieved of the control amount value PV. But regarding the target value SV, the proportional gain revision coefficient $\alpha$ and derivative gain revision coefficient $\gamma$ can be respectively independently set. Thus, so-called two degrees of freedom PID control is achieved.

Although this 2 DOF PID control device has various advantages, the following drawbacks have been pointed out. Specifically, as shown in equation (3) and (4), there are three different ways in which the derivative control operation may be applied to the target value SV and control amount value PV (influenced by external disturbance D), depending on the way in which $\gamma$ and $T_D$ are set (see Table 2 below). In actual industrial application these combinations may be employed selectively, or may be altered during operation, depending on the characteristics of the process and the requirements of control.

As a result, the values of the coefficient $\alpha$ used to give the proportional gain revision coefficient for relaizing two degrees of freedom differ greatly, depending on which of the above combinations is selected. Consequently, in a plant employing several hundred to several thousand PID control loops, it is necessary to change the setting of the value of coefficient $\alpha$ every time. This takes a considerable amount of time, It is also possible that the value of the coefficient $\alpha$ that is to be set might be forgotten.

If therefore the operation of setting the value of coefficient for relaizing the two degrees of freedom for proportional control operation could be carried out smoothly, this would contribute greatly to more general application of 2 DOF PID.

Document EP-A-0 333 477 discloses a two degrees of freedom PID control system that enables two degrees of freedom for P and I. This control system switches values of each of $\alpha$ and $\beta$ (two degrees of freedom coefficients) from one to the other, depending upon the presence or absence of $T_D$ (a time of differentiation). It should be noted, however, that the control system of this Document does not perform a differentiation operation even when a target value is changed.

It is an object of this invention to improve the controllability of a process control system.

Another object is to make it possible to automatically set a desirable value of proportional gain revision coefficient realising two degrees of freedom for proportional control operation in a process control system.

Additional objects and advantages will be obvious from the description which follows, or may be learned by practice of the invention.

The foregoing objects are achieved according to the present invention by providing a system for controlling a process system subject to an external disturbance by adjusting the value of a control amount output from the process system to a given target value, the system comprising:

    target value generating means for generating a given target value; and

main control means receiving the target value and the control amount value for performing control operations which suppress fluctuation of the control amount value produced by the external disturbance and adjust the control amount value to the given target value; wherein

said main control means includes

operating means for performing one of suppressing operation which performs at least proportional and integral control operations from a choice of proportional, integral and derivative control operations based on control constants including at least an adjusted proportional gain, an adjusted integral time and an adjusted derivative time for suppressing fluctuation of the control amount value produced by the external disturbance, and adjusting operation which performs at least proportional and integral control operations from a choice of proportional, integral and derivative control operations according to at least a given proportional gain revision coefficient for adjusting a proportional gain of the main control means from a choice of the adjusted given proportional gain revision coefficient and a given derivative time revision coefficient for adjusting a derivative time of the suppressing means, and adjusts the control amount value to the given target value,

proportional gain revision coefficient means for setting a plurality of given proportional gain revision coefficient, characterised by

coefficient selecting means for selecting a given proportional gain revision coefficient from among the plurality of given proportional gain revision coefficients according to the result of discriminating whether a derivative control operation of the suppressing operation is performed and whether a derivative control operation of the adjusting operation is performed.

Embodiments of the invention will now be described by way of example, with reference to the accompany drawings, in which:

FIG. 1 is a block diagram of a conventional two degrees of freedom type PID control system.

FIG. 2 is a block diagram of an embodiment of two degrees of freedom type PID control system according to the invention.

FIG. 3 is a block diagram of another embodiment of the invention.

FIG. 4 is a block diagram of a further embodiment of the invention.

The following is an explanation of an embodiment of this invention with reference to drawings. If the proportional gain and its derivative time which are optimal for suppression of external disturbance are Kp and $T_D$, respectively, and the proportional gain and its derivative time which are optimal for the tracking of the target value is Kp* And $T_D$* respectively, the following equations (5) and (6) can be obtained from equations (3) and (4).

$$Kp^* = \alpha \cdot Kp \qquad \alpha = (Kp^* / Kp) \quad (5)$$
$$Kp^* \cdot T_D^* = kp \cdot \alpha \cdot \gamma \cdot T_D \qquad \gamma = T_D^* / T_D) \quad (6)$$

Many methods have previously been proposed of finding control constants from the time response of an system to be controlled. An example of these which is frequently employed is the CHR (Chien, Hrones and Reswick) method shown in Table 1.

Table 1. Relationship between control constants and control operation mode

| Controlled system (transfer function) | input type | control mode | Kp proportional gain | $T_I$ integral time | $T_D$ derivative time | note |
|---|---|---|---|---|---|---|
| $\frac{K \cdot e^{-LS}}{1 + T \cdot s}$ | External Disturbance | P | 0.3T / KL | —— | —— | Minimum settling time without overshoot |
| | | PI | 0.6T / KL | 4 L | —— | |
| | | PID | 0.95T/ KL | 2.4L | 0.4L | |
| $\frac{K \cdot e^{-LS}}{1 + T \cdot s}$ | External Disturbance | P | 0.7T / KL | —— | —— | Minimum settling time with 20 % overshoot |
| | | PI | 0.7T / KL | 2.3L | —— | |
| | | PID | 1.2T / KL | 2L | 0.42L | |
| $\frac{K \cdot e^{-LS}}{1 + T \cdot s}$ | Target value | P | 0.3T / KL | —— | —— | Minimum settling time without overshoot |
| | | PI | 0.35T/ KL | 1.2T | —— | |
| | | PID | 0.6T / KL | T | 0.5L | |
| $\frac{K \cdot e^{-LS}}{1 + T \cdot s}$ | Target value | P | 0.7T / KL | —— | —— | Minimum settling time with 20 % overshoot |
| | | PI | 0.6T / KL | T | —— | |
| | | PID | 0.95T/ KL | 1.35T | 0.47L | |

In Table 1, K is the gain of the control system, T is the time constant, and L is the dead time.

From Table 1 and equation (5), proportional gain revision coefficient $\alpha$ for realizing two degrees of freedom for porportional control operation can be obtained, as shown in Table 2, depending on the combination of whether or not there is a derivative control action on the target value SV and whether or not there is a derivative

4

control operation on the control amount (which is influenced by external disturbance).

Table 2. Relationship between control mode
and proprotional gain revision coefficient

| No | Control mode | | $\gamma$ | $T_D$ | $\alpha$ | |
|---|---|---|---|---|---|---|
| | Target value - External Disturbance | | | | (without overshoot) | (with 20% overshoot) |
| 1 | PI ——— PID | | =0 | ≠0 | 0.37 | 0.50 |
| 2 | PI ——— PI | | Arbitrary | =0 | 0.58 | 0.86 |
| 3 | PI ——— PID | | ≠0 | ≠0 | 0.63 | 0.79 |

As is clear from Table 2, the value of the proportional gain revision coefficient $\alpha$ differs greatly, from 0.37 to 0.63, depending on the control mode i.e. on the combination of whether or not a derivative control action is performed on the target value SV and whether or not a derivative control action is performed on the control amount (which is influenced by disturbance).

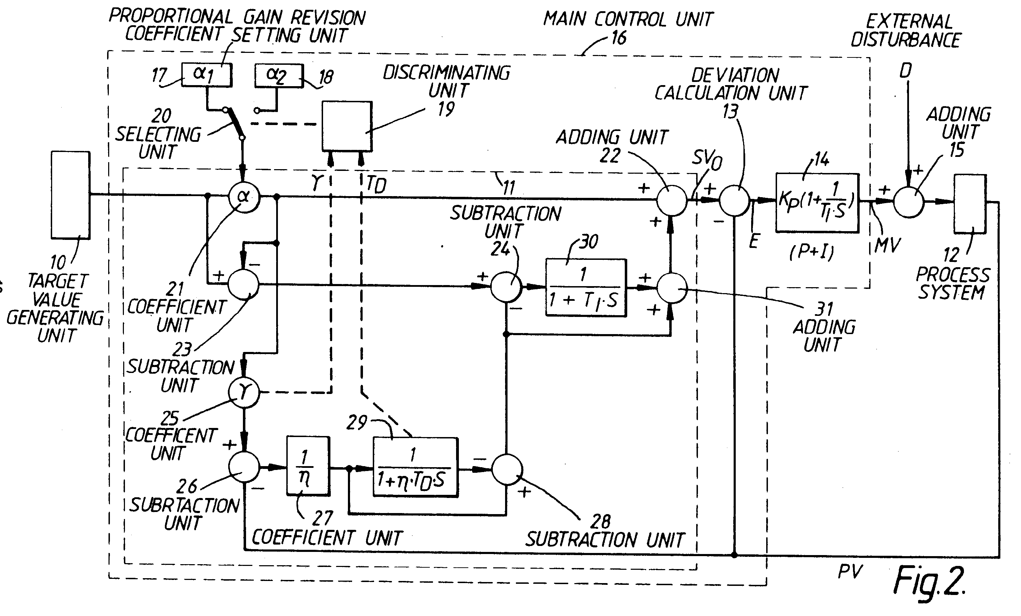

Next, an embodiment of the invention will be described with reference to FIG. 2. As shown in FIG. 2, a main control unit 16 having the function of discriminating the combination of derivative time $T_D$ and derivative time revision coefficient $\gamma$ for two degrees of freedom of derivative control operation, is utilized. Items in FIG. 2 which are the same as items in FIG. 1 are given the same reference numerals and a detailed description is omitted.

Specifically, this device is constructed by providing, within target value filter 11, proportional gain revision coefficient setting units 17, 18 that set two (or, in other cases,) coefficients $\alpha 1$, $\alpha 2$, of proportional gain in accordance for example with Table 2. Also provided is a discriminating unit 19 that discriminates the combination of derivative time $T_D$ and the coefficient $\gamma$ of derivative time by inputting the value of the derivative time $T_D$ that is set by a first order delay element 29, and the coefficient $\gamma$ of derivative time that is set by a coefficient unit 25. Further provided is a selecting unit 20 that automatically selects the optimum value from among the proportional gain revision coefficients that are set beforehand by proportional gain revision coefficient setting units 17 and 18 in accordance with the result of descrimination by descriminating unit 19, i.e., in accordance with changes of the combination of derivative time $T_D$ and derivative time revision coefficient $\gamma$. The coefficient $\alpha$ of proportional gain selected by this selecting unit 20 is set in coefficient unit 21.

This will now be explained by a concrete example. Descriminating unit 19 inputs the value of the derivative time $T_D$ that is set by first order delay element 29 and the coefficient $\gamma$ of derivative time that is set by coefficient unit 25. In accordance with this coefficient $\gamma$ and derivative time $T_D$, it then sets in coefficient unit 21 the following:

(I) when $\gamma = 0$ and $T_D$ is not equal to 0, from Table 2, proportional gain revision coefficient $\alpha 1 = 0.37$

(II) otherwise, proportional gain revision coefficient $\alpha 2 = 0.60$.

The reason for choosing the value "0.60" in case (II) above is that, in Table 3, 0.58 and 0.63 are close to each other, so they are substituted by a single intermediate value.

Consequently, the very different values of the coefficient $\alpha$ depending on the combination of whether or not there is a derivative control action on the target value SV and whether or not there is a derivative control action on the control amount (which is influenced by external disturbance) are identified. Also, the optimum proportional gain revision coefficients are set beforehand in proportional gain revision coefficient setting units 17 and 18, and descriminating unit 19 fetches one of the optimum proportional gain revision coefficients from proportional gain revision coefficient setting units 17 or 18 after discriminating derivative time $T_D$ and the coefficient $\gamma$ of derivative time and sets this optimum proportional gain revision coefficient automatically in coefficient unit 21. This makes it possible to eliminate the troublesome operation of changing the setting of the proportional gain revision coefficient every time, depending on the combination of derivative time $T_D$ and the coefficient $\gamma$ of derivative time, which is previously required. This enables an enormous improvement in the setting operation, in particular in the case of large plants, where several hundred to several thousand control loops are employed.

Furthermore, since the value of the coefficient $\alpha$ if proportional gain can always be automatically set, optimal overall two degrees of freedom PID control can be maintained.

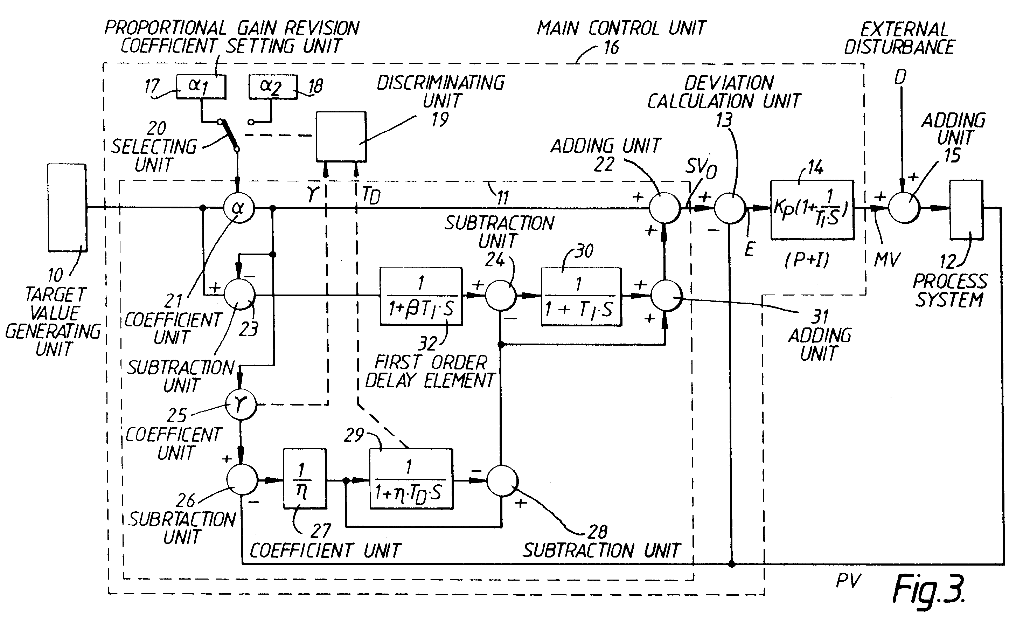

Next, another embodiment of the invention is shown in FIG. 3. In this embodiment, a first order delay element 32 is inserted between subtraction unit 23 and subtraction unit 24 of target value filter 11. Complete two degrees of freedom PID control is obtained by obtaining the integral time $T_I$ equivalently in two degrees of freedom form, by applying a coefficient $\beta$ to the time constant of this first order delay element 32, i.e. by using a time constant $\beta \cdot T_I$.

The optimum value of the coefficient $\alpha$ of proportional gain can of course be set in coefficient unit 21 in accordance with the combination of derivative time $T_D$ and the coefficient $\gamma$ of derivative time, in the same way as in FIG. 2, with this target value filter 11 also.

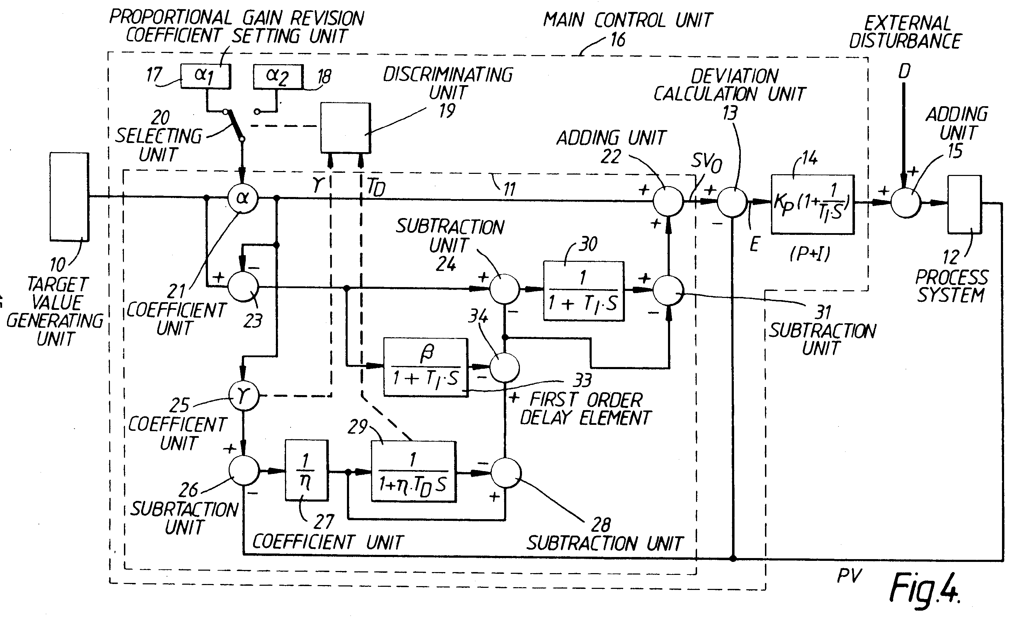

FIG. 4 showns yet a further embodiment of the invention. In the device of this embodiment, a first order delay element 33 is provided on the output side of subtraction unit 23 of target value filter 11, and a subtraction 34 that subtracts the output of this first order delay element 32 from the output of subtraction unit 28 is provided. Full two degrees of freedom PID control is obtained by equivalently obtaining the integral time $T_D$ in two degrees of freedom form, by using the coefficient of $\beta$ with this first order delay element 33. In this case also, the optimum value of the coefficient $\alpha$ of proportional gain can be set in coefficient unit 21, depending on the combination of derivative time $T_D$ and the coefficient $\gamma$ of derivative time, in this case too.

Apart from the above, this invention can be implemented modified in various ways without departing from its essence.

As described above, with this invention, the optimum coefficient of proportional gain can be automatically selected and set in accordance with the combination of derivative time $T_D$ and the coefficient $\gamma$ of derivative time. A two degrees of freedom control device can thus be provided that is easy to adjust, and that offers high controllability and versatility.

## Claims

1. A system for controlling a process system subject to an external disturbance by adjusting the value of a control amount output from the process system to a given target value, the system comprising:

    target value generating means (10) for generating a given target value; and

    main control means (16) receiving the target value and the control amount value for performing control operations which suppress fluctuation of the control amount value produced by the external disturbance and adjust the control amount value to the given target value; wherein

    said main control means includes

    operating means (11, 14) for performing one of suppressing operation which performs at least proportional and integral control operations from a choice of proportional, integral and derivative control operations based on control constants including at least an adjusted proportional gain, an adjusted integral time and an adjusted derivative time for suppressing fluctuation of the control amount value produced by the external disturbance, and adjusting operation which performs at least proportional and integral control operations from a choice of proportional, integral and derivative control operations according to at least a given proportional gain revision coefficient for adjusting a proportional gain of the main control means from a choice of the adjusted given proportional gain revision coefficient and a given derivative time revision coefficient for adjusting a derivative time of the suppressing means, and adjusts the control amount value to the given target value,

    proportional gain revision coefficient means (17, 18) for setting a plurality of given proportional gain revision coefficient, characterised by

    coefficient selecting means (19, 20) for selecting a given proportional gain revision coefficient from among the plurality of given proportional gain revision coefficients according to the result of discriminating whether a derivative control operation of the suppressing operation is performed and whether a derivative control operation of the adjusting operation is performed.

2. The system of claim 1, wherein the proportional gain revision coefficient means (17, 18) comprises means for setting two given proportional gain revision coefficients, and coefficient selecting means (19, 20) comprises means for selecting one of the two given proportional gain revision coefficient according to the result of discriminating between a first case where the derivative control operation of the suppressing operation is performed and the derivative control operation of the adjusting operation is not performed, and other case.

3. The system of claim 1, further comprises integral time revision coefficient means (32) for adjusting the integral time of suppressing operation according to a given revision coefficient and adjusting the control amount value to the given target value.

4. A method of controlling a process system subject to an external disturbance by adjusting the value of a control amount output from the process system to a given target value, the system comprising:

    generating a given target value;

receiving the target value and the control amount value and performing control operations which suppress fluctuation of the control amount value produced by the external disturbance and which adjust the control amount value to the given target value;

performing one of suppressing operation which performs at least proportional and integral control operations from a choice of proportional, integral and derivative control operations based on control constants including at least an adjusted proportional gain, an adjusted integral time and an adjusted derivative time for suppressing fluctuations of the control amount value produced by the external disturbance, adjusting at least proportional and integral control operations from a choice of proportional, integral and derivative control operations according to at least a given proportional gain revision coefficient for adjusting the proportional gain from a choice of the adjusted given proportional gain revision coefficient and a given derivative time revision coefficient for adjusting the derivative time, to adjust the control amount value to the given target value, and

setting a plurality of given proportional gain revision coefficient, characterised by

selecting a given proportional gain revision coefficient from among the plurality of given proportional gain revision coefficients according to the result of discriminating whether a derivative control operation of the suppressing operation is performed and whether a derivative control operation of the adjusting operation is performed.

5. The method of claim 4 wherein the step of setting a plurality of given gain revision coefficient comprises the step of setting two given gain revision coefficients, and the step of selecting the given proportional gain revision coefficient comprises the step of selecting one of the two given proportional gain revision coefficients two proportional gain revision coefficients according to the result of discriminating between a first case where derivative control operation for suppressing the fluctuation of the control amount value is performed and derivative control operation of for adjusting the control amount value to the given target value is not performed, and other cases.

6. The method of claim 4, further comprising the step of adjusting the integral time according to a given integral time revision coefficient to adjust the control amount value to the given target value.

7. A system for controlling a process system subject to an external disturbance by adjusting the value of a control amount from the process system to a given target value, the system comprising:

target value generating means (10) for generating a given target value; and

control means (16) for receiving the target value and the control amount for performing control operations to suppress fluctuations of the control amount value produced by the external disturbance and to adjust the control amount value to the given target value, the control means, in use, performing at least proportional and integral control operations and, selectively, derivative control operations based on control constants including at least proportional gain, integral time and, selectively, derivative time, adjusted to suppress fluctuation of the control amount value produced by the external disturbance, the control means including:

means (11) for filtering the generated target value according to at least a given proportional gain revision coefficient ($\alpha$) to adjust the proportional gain of the control means and, selectively, a given derivative time revision coefficient ($\gamma$) to adjust the derivative time of the control means;

proportional gain revision coefficient means (17,18) for setting a plurality of given gain revision coefficients, characterised by:

coefficient selecting means (19,20) for selecting the given proportional gain revision coefficients according to the result of discriminating whether a derivative control operation is performed, and whether the derivative time revision coefficient ($\gamma$), is selected in the means (11) for filtering.

**Patentansprüche**

1. System zur Regelung eines Prozeßsystems, das einer externen Störung unterworfen ist, durch Einstellung des Werts einer vom Prozeßsystem ausgegebenen Regelgröße auf einen gegebenen Zielwert, wobei das System enthält:

Zielwerterzeugungseinrichtung (10) zur Erzeugung eines gegebenen Zielwerts; und

Hauptregeleinrichtung (16), die den Zielwert und den Regelgrößenwert zur Durchführung von Regeloperationen, welche eine Fluktuation des Regelgrößenwerts, die durch die externe Störung hervorgerufen wird, unterdrücken und den Regelgrößenwert auf den gegebenen Zielwert einstellen, empfängt;

wobei

die Hauptregeleinrichtung einschließt

Operationseinrichtungen (11, 14) zur Durchführung einer Unterdrückungsoperation, die mindestens Proportional- und Integralregeloperationen aus einer Auswahl von Proportional-, Integral- und Differentialregeloperationen durchführt, die auf Regelkonstanten einschließlich mindestens einer eingestellten Proportionalverstärkung, einer eingestellten Integralzeit und einer eingestellten Differentialzeit zur Unterdrückung einer Fluktuation des Regelgrößenwerts, die durch die externe Störung hervorgerufen wird, basieren, und einer Einstelloperation, die mindestens Proportional- und Integralregeloperationen aus einer Auswahl von Integral- und Differentialregeloperationen gemäß mindestens eines gegebenen Proportionalverstärkungsüberprüfungskoeffizienten zur Einstellung einer Proportionalverstärkung der Hauptregeleinrichtung aus einer Auswahl des eingestellten gegebenen Proportionalverstärkungsüberprüfungskoeffizienten und eines gegebenen Differentialzeitüberprüfungskoeffizienten zur Einstellung einer Differentialzeit der Unterdrückungseinrichtung durchführt und den Regelgrößenwert auf den gegebenen Zielwert einstellt,

Proportionalverstärkungsüberprüfungskoeffizienteneinrichtungen (17, 18) zur Einstellung einer Vielzahl von gegebenen Proportionalverstärkungsüberprüfungskoeffizienten, gekennzeichnet durch

Koeffizientenauswahleinrichtungen (19, 20) zur Auswahl eines gegebenen Proportionalverstärkungsüberprüfungskoeffizienten aus einer Vielzahl von gegebenen Proportionalverstärkungsüberprüfungskoeffizienten gemäß dem Ergebnis der Unterscheidung, ob eine Differentialregeloperation der Unterdrückungsoperation durchgeführt ist und ob eine Differentialregeloperation der Einstelloperation durchgeführt ist.

2. System nach Anspruch 1, wobei die Proportionalverstärkungsüberprüfungskoeffizienteneinrichtungen (17, 18) Einrichtungen zum Einstellen von zwei gegebenen Proportionalverstärkungsüberprüfungskoeffizienten enthalten, und die Koeffizientenauswahleinrichtungen (19, 20) Einrichtungen zur Auswahl eines der zwei gegebenen Proportionalverstärkungsüberprüfungskoeffizienten gemäß dem Resultat der Unterscheidung zwischen einem ersten Fall, in dem die Differentialregeloperation der Unterdrückungsoperation durchgeführt wird und die Differentialregeloperation der Einstelloperation nicht durchgeführt wird, und einem anderen Fall, enthalten.

3. System nach Anspruch 1, das weiterhin eine Integralzeitüberprüfungskoeffizienteneinrichtung (32) zur Einstellung der Integralzeit der Unterdrükkungsoperation gemäß eines gegebenen Überprüfungskoeffizienten und zur Einstellung des Regelgrößenwerts auf einen gegebenen Zielwert enthält.

4. Verfahren zur Regelung eines Prozeßsystems, das einer externen Störung unterworfen ist, durch Einstellung des Werts einer vom Prozeßsystem ausgegebenen Regelgröße auf einen gegebenen Zielwert, wobei das System einschließt:

Erzeugen eines gegebenen Zielwerts;

Empfangen des Zielwerts und des Regelgrößenwerts und Durchführen von Regeloperationen, welche eine Fluktuation des Regelgrößenwerts, die durch die externe Störung hervorgerufen wird, unterdrücken, und die den Regelgrößenwert auf den gegebenen Zielwert einstellen;

Durchführen einer Unterdrückungsoperation, die mindestens Proportional- und Integralregeloperationen aus einer Auswahl von Proportional-, Integral- und Differentialregeloperationen durchführt, die auf Regelkonstanten einschließlich mindestens einer eingestellten Proportionalverstärkung, einer eingestellten Integralzeit und einer eingestellten Differentialzeit zur Unterdrückung von Fluktuationen des Regelgrößenwerts, die durch externe Störungen hervorgerufen werden, basieren, Einstellen von mindestens Proportional- und Integralregeloperationen aus einer Auswahl von Proportional-, Integral- und Differentialregeloperationen gemäß mindestens eines gegebenen Proportionalverstärkungsüberprüfungskoeffizienten zur Einstellung der Proportionalverstärkung aus einer Auswahl des eingestellten gegebenen Proportionalverstärkungsüberprüfungskoeffizienten und eines gegebenen Differentialzeitüberprüfungskoeffizienten zur Einstellung der Differentialzeit, um den Regelgrößenwert auf den gegebenen Zielwert einzustellen, und

Einstellen einer Vielzahl von gegebenen Proportionalverstärkungsüberprüfungskoeffizienten, gekennzeichnet durch

Auswählen eines gegebenen Proportionalverstärkungsüberprüfungskoeffizienten aus einer Vielzahl von gegebenen Proportionalverstärkungsüberprüfungskoeffizienten gemäß dem Ergebnis der Unterscheidung, ob eine Differentialregeloperation der Unterdrückungsoperation durchgeführt wird, und ob eine Differentialregeloperation der Einstelloperation durchgeführt wird.

**5.** Verfahren nach Anspruch 4, wobei der Schritt zum Einstellen einer Vielzahl von gegebenen Verstärkungsüberprüfungskoeffizienten den Schritt zum Einstellen von zwei gegebenen Verstärkungsüberprüfungskoeffizienten enthält, und der Schritt des Auswählens des gegebenen Proportionalverstärkungsüberprüfungskoeffizienten den Schritt des Auswählens eines der zwei gegebenen Proportionalverstärkungsüberprüfungskoeffizienten gemäß des Resultats der Unterscheidung zwischen einem ersten Fall, in dem die Differentialregeloperation zur Unterdrükkung der Fluktuation des Regelgrößenwerts durchgeführt wird und die Differentialregeloperation zum Einstellen des Regelgrößenwerts auf den gegebenen Zielwert nicht durchgeführt wird, und anderen Fällen enthält.

**6.** Verfahren nach Anspruch 4, weiterhin enthaltend den Schritt des Einstellens der Integralzeit gemäß eines gegebenen Integralzeitüberprüfungskoeffizienten, um den Regelgrößenwert auf den gegebenen Zielwert einzustellen.

**7.** System zur Regelung eines Prozeßsystems, das einer externen Störung unterworfen ist, durch Einstellung des Werts einer Regelgröße des Prozeßsystems auf einen gegebenen Zielwert, wobei das System enthält:

Zielwerterzeugungseinrichtung (10) zur Erzeugung eines gegebenen Zielwerts; und

Regeleinrichtung (16) zum Empfang des Zielwerts und der Regelgröße zur Durchführung von Regeloperationen, um Fluktuationen des Regelgrößenwerts, die durch die externe Störung hervorgerufen werden, zu unterdrücken, und um den Regelgrößenwert auf den gegebenen Zielwert einzustellen, wobei die Regeleinrichtung im Einsatz mindestens Proportional- und Integralregeloperationen und wahlweise Differentialregeloperationen durchführt, die auf Regelkonstanten einschließlich mindestens der Proportionalverstärkung, der Integralzeit und wahlweise der Differentialzeit, eingestellt, um die Fluktuation des Regelgrößenwerts, die durch die externe Störung hervorgerufen wird, zu unterdrücken, basieren, und wobei die Regeleinrichtung einschließt:

Einrichtung (11) zur Filterung des erzeugten Zielwerts gemäß mindestens einem gegebenen Proportionalverstärkungsüberprüfungskoeffizienten (a), um die Proportionalverstärkung der Regeleinrichtung einzustellen, und wahlweise einem gegebenen Differentialzeitüberprüfungskoeffizienten ($\gamma$), um die Differentialzeit der Regeleinrichtung einzustellen;

Proportionalverstärkungsüberprüfungskoeffizienteneinrichtungen (17, 18) zur Einstellung einer Vielzahl von gegebenen Verstärkungsüberprüfungskoeffizienten, gekennzeichnet durch:

Koeffizientenauswahleinrichtungen (19, 20) zur Auswahl der gegebenen Proportionalverstärkungsüberprüfungskoeffizienten gemäß dem Resultat der Unterscheidung, ob eine Differentialregeloperation durchgeführt ist, und ob der Differentialzeitüberprüfungskoeffizient ($\gamma$) in der Einrichtung (11) zur Filterung ausgewählt ist.

## Revendications

**1.** Dispositif de régulation un dispositif de processus soumis à une perturbation externe en ajustant la valeur d'une quantité de régulation fournie par le dispositif de processus à une valeur cible donnée, le dispositif comprenant :

un dispositif de génération de valeur cible (10) pour générer une valeur cible donnée ; et

un dispositif de régulation principal (16) recevant la valeur cible et la valeur de la quantité de régulation pour réaliser des opérations de régulation qui suppriment une fluctuation de la valeur de la quantité de régulation produite par la perturbation externe et qui ajustent la valeur de quantité de régulation à la valeur cible donnée ; dans lequel

ledit dispositif de régulation principal comprend

un dispositif de fonctionnement (11, 14) pour réaliser une opération de suppression qui réalise au moins des opérations de régulation proportionnelle et intégrale à partir d'un choix d'opérations de régulation proportionnelle, intégrale et dérivée sur la base des constantes de régulation comprenant au moins un gain proportionnel ajusté, un temps intégral ajusté et un temps dérivé ajusté pour supprimer la fluctuation de la valeur de la quantité de régulation produite par la perturbation externe, et pour ajuster une opération qui réalise au moins des opérations de régulation proportionnelle et intégrale à partir d'un choix d'opérations de régulation proportionnelle, intégrale et dérivée en fonction d'au moins un coefficient de révision de gain proportionnel donné pour ajuster un gain proportionnel du dispositif de régulation principal à partir d'un choix du coefficient de révision de gain proportionnel donné ajusté et d'un coefficient de révision de temps dérivé donné pour ajuster un temps dérivé du dispositif de suppression, et qui ajuste la valeur de quantité de régulation à la valeur cible donnée,

un dispositif de coefficient de révision de gain proportionnel (17, 18) pour régler une pluralité de coefficients de révision de gain proportionnel donnés, caractérisé par

un dispositif de sélection de coefficient (19, 20) pour sélectionner un coefficient de révision de gain proportionnel donné à partir de la pluralité de coefficients de révision de gain proportionnel donnés en fonction du résultat de discrimination entre le cas où une opération de régulation dérivée de l'opération de suppression est réalisée et celui où une opération de régulation dérivée de l'opération d'ajustage est réalisée.

2. Dispositif selon la revendication 1, dans lequel le dispositif de coefficient de révision de gain proportionnel (17, 18) comprend un dispositif pour régler deux coefficients de révision de gain proportionnel donnés, et un dispositif de sélection de coefficient (19, 20) comprend un dispositif pour sélectionner un des deux coefficients de révision de gain proportionnel donné en fonction du résultat de la discrimination entre un premier cas où l'opération de régulation dérivée de l'opération de suppression est réalisée et l'opération de régulation dérivée de l'opération d'ajustage n'est pas réalisée, et d'autres cas.

3. Dispositif selon la revendication 1, qui comprend en outre un dispositif de coefficient de révision de temps intégral (32) pour ajuster le temps intégral de l'opération de suppression selon un coefficient de révision donné et pour ajuster la valeur de la quantité de régulation à la valeur cible donnée.

4. Procédé de régulation d'un dispositif de processus soumis à une perturbation externe en ajustant la valeur d'une quantité de régulation fournie par le dispositif de processus à une valeur cible donnée, le dispositif comprenant les étapes de :

génération d'une valeur cible donnée ;

réception d'une valeur cible et de la valeur de la quantité de régulation et réalisation des opérations de régulation qui suppriment la fluctuation de la valeur de quantité de régulation produite par la perturbation externe et qui ajustent la valeur de quantité de régulation à une valeur cible donnée ;

réalisation d'une opération de suppression qui réalise au moins des opérations de régulation proportionnelle et intégrale à partir d'un choix d'opérations de régulation proportionnelle, intégrale et dérivée sur la base des constantes de régulation comprenant au moins un gain proportionnel ajusté, un temps intégral ajusté et un temps dérivé ajusté pour supprimer des fluctuations de la valeur de quantité de régulation produite par la perturbation externe, d'ajustage au moins des opérations de régulation proportionnelle et intégrale à partir d'un choix d'opérations de régulation proportionnelle, intégrale et dérivée selon au moins un coefficient de révision de gain proportionnel donné pour ajuster le gain proportionnel à partir d'un choix de coefficients de révision de gain proportionnel donné ajusté et d'un coefficient de révision de temps dérivé donné pour ajuster le temps dérivé, afin d'ajuster la valeur de la quantité de régulation à la valeur cible donnée, et

réglage d'une pluralité de coefficients de révision de gain proportionnel donnés, caractérisé par

une sélection d'un coefficient de révision de gain proportionnel donné parmi la pluralité de coefficients de révision de gain proportionnel donnés en fonction du résultat d'une discrimination entre le cas où une opération de régulation dérivée de l'opération de suppression est réalisée et celui où une opération de régulation dérivée de l'opération d'ajustage est réalisée.

5. Procédé selon la revendication 4 dans lequel l'étape de réglage d'une pluralité de coefficients de révision de gain donnés comprend l'étape de réglage de deux coefficients de révision de gain proportionnel donné, et l'étape de sélection du coefficient de révision de gain proportionnel donné comprend l'étape de sélection d'un des deux coefficients de révision de gain proportionnel donné selon le résultat de la discrimination entre un premier cas où une opération de régulation dérivée pour supprimer la fluctuation de la valeur de la quantité de régulation est réalisée et une opération de régulation dérivée pour ajuster la valeur de la quantité de régulation à la valeur cible donnée n'est pas réalisée, et d'autres cas.

6. Procédé selon la revendication 4, comprenant en outre l'étape de réglage du temps intégral en fonction d'un coefficient de révision de temps intégral donné pour ajuster la valeur de la quantité de régulation à une valeur cible donnée.

7. Dispositif de régulation d'un dispositif de processus soumis à une perturbation externe en ajustant la valeur d'une quantité de régulation à partir d'un dispositif de traitement à une valeur cible donnée, le dispositif comprenant :

un dispositif de génération de valeur cible (10) pour générer une valeur cible donnée ; et

un dispositif de régulation (16) pour recevoir la valeur cible et la quantité de régulation pour réaliser des opérations de régulation pour supprimer des fluctuations de la valeur de la quantité de régulation produite par la perturbation externe et pour ajuster la valeur de la quantité de régulation à la valeur cible donnée, le dispositif de régulation, lors de l'utilisation, réalisant au moins des opérations de régulation proportionnelle et intégrale et, de façon sélective des opérations de régulation dérivées sur la base des constantes de régulation comprenant au moins un gain proportionnel, un temps intégral et sélectivement un temps dérivé, ajusté pour supprimer la fluctuation de la valeur de la quantité de régulation produite par la perturbation externe, le dispositif de régulation comprenant :

un dispositif (11) pour filtrer la valeur cible générée selon au moins un coefficient de révision de gain proportionnel donné ($\alpha$) afin d'ajuster le gain proportionnel du dispositif de régulation et, sélectivement, un coefficient de révision de temps dérivé donné ($\gamma$) afin d'ajuster le temps dérivé du dispositif de régulation ;

un dispositif de coefficient de révision de gain proportionnel (17, 18) pour régler une pluralité de coefficients de révision de gain proportionnel donné, caractérisé par :

un dispositif de sélection de coefficient (19, 20) pour sélectionner les coefficients de révision de gain proportionnel donnés selon le résultat de la discrimination entre le cas où une opération de régulation dérivée est réalisée, et celui où le coefficient de révision de temps dérivé ($\gamma$) est sélectionné dans le dispositif (11) de filtrage.

Fig.1.

EXTERNAL DISTURBANCE

$D$

ADDING UNIT — 15

PROCESS SYSTEM — 12

DEVIATION CALCULATION UNIT — 13

14 — $K_P\left(1+\dfrac{1}{T_I \cdot S}\right)$ — $(P+I)$

$MV$ · $E$ · $SV_0$ · $PV$

TARGET VALUE FILTER — 11

SUBTRACTION UNIT — 24

30 — $\dfrac{1}{1+T_I \cdot S}$

31 — SUBTRACTION UNIT

$(SV \cdot \alpha)$

$SV(1-\alpha)$

FIRST ORDER DELAY ELEMENT — 29 — $\dfrac{1}{1+\eta T_D S}$

28 — SUBTRACTION UNIT

27 — COEFFICIENT UNIT — $\dfrac{1}{\eta}$

21 — COEFFICIENT UNIT — $\alpha$

23 — SUBTRACTION UNIT

25 — COEFFICIENT UNIT — $\gamma$

26 — SUBTRACTION UNIT

10 — TARGET VALUE GENERATING UNIT

12

Fig.2.

Fig.3.

Fig.4.